Europäisches Patentamt

European Patent Office

Office européen des brevets

(19)

(11) Publication number: **0 106 457**
**A2**

(12) **EUROPEAN PATENT APPLICATION**

(21) Application number: **83304830.9**

(22) Date of filing: **22.08.83**

(51) Int. Cl.³: **B 01 D 33/38**

(30) Priority: **20.08.82 NZ 201655**

(43) Date of publication of application:
**25.04.84 Bulletin 84/17**

(84) Designated Contracting States:
**DE FR GB**

(71) Applicant: **CONTRA-SHEAR HOLDINGS LIMITED**
**31 Ruskin Street**
**Parnell Auckland(NZ)**

(72) Inventor: **Burgess, George**
**5 Chevron Place**
**Castor Bay Auckland(NZ)**

(74) Representative: **Matthews, Graham Farrah et al,**
**MATTHEWS HADDAN & CO Haddan House 33 Elmfield**
**Road**
**Bromley Kent BR1 1SU(GB)**

(54) **Feed means for rotary screen.**

(57) A means for supplying a liquid containing suspended solids into the interior of a rotary drum screen for removal of the solids, of the kind comprising a tank mounted in the interior of the screen and having a weir over which the liquid flows onto the inner face of the screen, further includes a baffle situated in the tank so as to provide a constriction in the flow path of the liquid from an inlet into the tank to the weir, the function of the baffle being to suppress unwanted surge and ripple in the liquid in the tank and to improve the distribution of the outflowing liquid over the whole of the weir.

FIG 1

EP 0 106 457 A2

Title:      "Feed Means for Rotary Screen"

This invention relates to means for supplying liquids into rotary screens for removal of suspended solvents therefrom.

A rotary screen is described in the complete specification of our New Zealand Patent No. 182084, and in that patent there is disclosed a method of feeding liquid to be screened into the screen using a tank having a wall over which the liquid overflows to fall onto the inner face of the screen. Although the feeding means shown in that complete specification is of the preferred kind in which the liquid overflows one wall only so as to fall onto the screen against the direction of rotation of the screen, the present invention has application also to feeding means not having that refinement, for example tanks in which the liquid can flow in an uncontrolled manner over more than one wall of the tank. In this specification and in the claims, the expression "feed means for a rotary screen" means specifically a tank into which liquid to be screened is supplied and from which the liquid overflows into a rotary screen.

While feed means for a rotary screens are the preferred means of supplying liquid to be screened to a rotary screen, the design disclosed in the said complete specification No. 182084 does suffer from two disadvantages in particular. Firstly, the tank is preferably constructed to extend a considerable distance into the screen with the intention that the discharge of liquid should take place over some distance along the axis of the screen so as to avoid overloading a small portion of the screen and so as to make best use of the screening surface available. In practice, however, the flow of the liquid into the tank tends to cause the discharge to be concentrated towards the end of the tank most remote from the point of introduction of the liquid into the tank, this problem increasing with increasing volume of flow of the liquid into the tank. Secondly, it is found that, with increasing volume of flow, there is an increasing problem of surge and ripple in the tank which can severely impair the efficiency of the discharge.

The object of the present invention is to improve the design of the known feed means for a rotary screen with a view to ameliorating those problems.

The present invention provides a feed means for a rotary screen which has a baffle disposed therein in the flow path of liquid flowing from an inlet into the tank to a place of discharge therefrom, so as to constrict the said flow path.

Preferably, the baffle extends obliquely across the flow path so as to reduce the cross-sectional area of the flow path with increasing distance from the inlet. Preferably, also, the cross-sectional area of the flow path is increased again downstream of the constriction.

It is found that the provision of this baffle greatly reduces surge and ripple in the tank and, where the preferred features are included, the liquid after passing through the constriction may be · controlled by the provision of suitable walls or baffles to direct its flow most efficiently to the points of discharge.

Preferably, this feature is made use of by providing a wall in the expanded portion in the tank which is shaped to deflect the flow of the liquid over a wall of the tank, thus providing control of the point of discharge. In order to fit inside a rotary screen, the tank preferably has two side walls which are substantially parallel in plan, with the baffle extending obliquely across the flow path of the liquid therein towards a first of the side walls with increasing distance in the flow path from the inlet but is spaced from such wall to provide a constricted passage for the liquid into the expanded portion in the tank, and a second of the side walls is a boundary of the expanded portion of the tank and is lower relative to the liquid in the tank than the first said side wall. That construction ensures that the liquid is discharged over a wall which is substantially parallel to the axis of rotation of the screen, so as to obtain the advantages disclosed by the said complete specification No. 182084. In that construction, preferably the wall which is shaped to deflect the flow of the liquid is a wall of the expanded portion of the tank which extends between the said side walls, and is shaped to deflect liquid over the second side wall.

In order that the invention may be more clearly understood and readily carried into effect, one embodiment thereof is hereunder described with reference to the accompanying drawings wherein

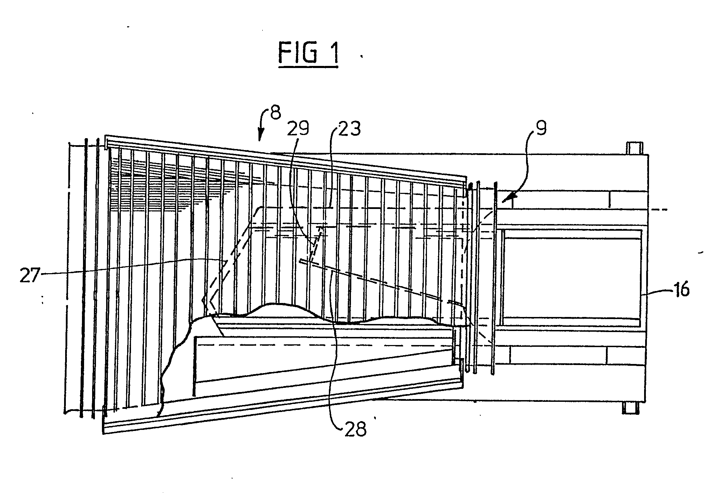

Figure 1 is a partly cut away plan view from above showing a rotary screen and an overlow discharge tank according to the present invention;

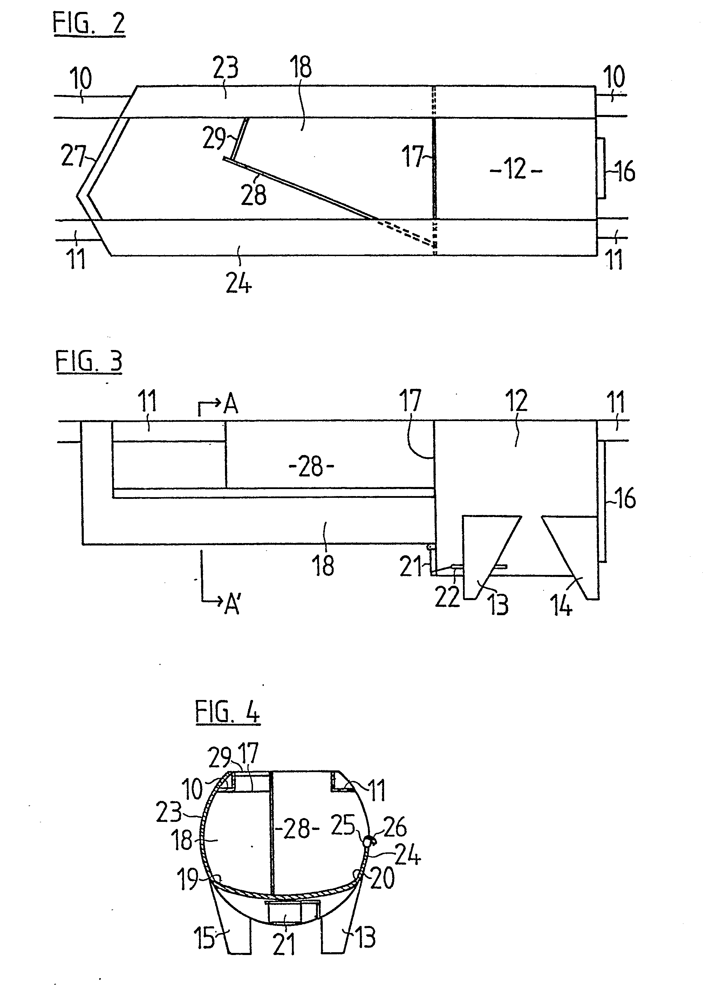

Figure 2 is a plan view from above of the feed means for a rotary screen of Figure 1;

Figure 3 is a side elevation of the feed means for a rotary screen; and

Figure 4 is a sectioned elevation taken on line A-A' of Figure 2.

The feed means for a rotary screen of this embodiment is intended for use in a rotary screen of the kind disclosed in the said complete specification No. 182084, or a screen

8 of generally similar construction which is frusto-conical.

A pair of girders 10,11 extend longitudinally through the rotary screen and support the feed means for a rotary screen. A surge tank 12 mounted on legs, for example 13,14,15 and provided with an inlet 16 for liquid to be screened is positioned immediately against one end 9 of the screen so as to extend slightly thereinto. The wall 17 of the surge tank opposite to the inlet 16 is adapted to provide a weir over which liquid entering to the inlet 16 can overflow into a discharge tank 18.

The surge tank 12 is substantially circular in cross section, and the discharge tank 18 is shallower. In the embodiment shown, the inside diameter of the surge tank is 1200mm, but the bottom of the discharge tank 18 is curved on a radius of 1500mm, with 100mm radii at the corners 19,20. The surge tank 12 is provided with a gate 21 and operating linkage 22 therefor for cleaning purposes.

The discharge tank 18 has two side walls 23,24 which extend parallel to the axis of the screen, one 24 of which is lower than the other and terminates in a pipe 25 and a lip 26 providing a weir over which liquid in the discharge tank may be discharged. In operation, liquid entering the surge tank 12 through the inlet 16 flows over the weir 17 into the discharge tank 18, and from there discharges over the lip 26 onto the interior of the screen, which is rotated so that the liquid falls onto the screen against its direction of rotation.

To prevent unwanted surge and ripple and concentrated discharge of the liquid over the end of the wall 24 most remote from the weir 17, a baffle 28 is installed in the surge tank 18. The baffle extends from the bottom of the surge tank to a point higher than the maximum level of the liquid in the surge tank, from the junction of the wall 24 and the weir 17 to extend obliquely across the discharge tank so as to approach but not contact the wall 23. The baffle is secured by a stay 29 to the girder 10. At its point of closest approach to the wall 23, the baffle severely constricts the flow path of liquid entering the discharge tank over the weir 17. Liquid passing through this constriction emerges with some velocity and is deflected off an end wall 27 of the tank. The sudden expansion of space available to the liquid after passing through the constriction effectively damps surge and ripple even during periods of high flow rate. The wall 27 is curved or, as shown, angled to reflect the flow of the liquid back towards the baffle and over the wall 24. The angle or curvature of the wall 27 is selected to effectively spread the liquid over the whole length of the wall 24 so that maximum use is made of the available screen surface.

In practice, it is found that the use of the baffle 28 in this feed means for a rotary screen substantially increases the rate at which liquid can be screened, both by avoiding disturbances in the flow of liquid in the tank and by making more effective use of the available area of the screen.

CLAIMS

1. A feed means for a rotary screen as hereinbefore defined having a baffle disposed therein in the flow path of liquid flowing from an inlet into the tank to a place of discharge therefrom, so as to constrict the said flow path.

2. A feed means for a rotary screen according to Claim 1, wherein the cross-sectional area of the flow path of the liquid is increased downstream of the constriction thereof by the baffle.

3. A feed means for a rotary screen according to Claim 2, where the baffle extends obliquely across the said flow path and reduces the cross-sectional area of the flow path with increasing distance from the said inlet.

4. A feed means for a rotary screen according to Claim 3, wherein a wall of the tank bounding a portion thereof in which the cross-sectional area of the flow path is increased is shaped to deflect the flow of the liquid over a wall of the tank.

5. A feed means for a rotary screen according to Claim 4, wherein the tank has two side walls which are substantially parallel in plan, the baffle extends obliquely across the flow path of the liquid therein towards a first of the side walls with increasing distance from the inlet in the flow path but is spaced from such wall to provide a constriction in the flow path, and a second of the side walls is a boundary of that portion of the tank in which the cross-sectional area of the flow path is increased and is lower relative to the liquid in the tank than the first said side wall.

6. A feed means for a rotary screen according to Claim 5, wherein the wall which is shaped to deflect the flow of the liquid extends between the said side walls and is shaped to deflect the liquid over the second side wall.

7. A feed means for a rotary screen having its parts constructed and arranged substantially as hereinbefore described with reference to the accompanying drawings.

8. A feed means for a rotary screen according to any preceding claim in combination with a frustro-conical rotary screen.

9. A combination according to claim 8, wherein the feed means for a rotary screen extends into the interior of the screen from the smaller end thereof.

FIG 1

FIG. 2

FIG. 3

FIG. 4